# EUROPÄISCHE PATENTANMELDUNG

(11) **EP 1 176 361 A2**
(43) Veröffentlichungstag der Anmeldung: **30.01.2002**
(21) Anmeldenummer: 01116177.5
(22) Anmeldetag: 04.07.2001
(51) Int. Cl.: F21S 8/10, B60Q 1/26

(54) **Mehrkammerleuchte für Fahrzeuge**

(30) Priorität: 26.07.2000 DE 10036324
(71) Anmelder: Hella KG Hueck & Co., 59552 Lippstadt (DE)
(72) Erfinder: Bode, Wolfgang, 59556 Lippstadt (DE)

(57) **Zusammenfassung**

Die Erfindung betrifft eine Mehrkammerleuchte (10) für Fahrzeuge, mit einem Gehäuse (32), einer davor angeordneten, aus mehreren, den jeweiligen Gehäusekammern (12,14,16) zugeordneten Abschnitten bestehenden Lichtscheibe (26) und mit mindestens einer jedem Lichtscheibenabschnitt zugeordneten Lichtquelle.
Aufgabe der Erfindung ist es, eine gattungsgemäße Mehrkammerleuchte (10) derart weiterzubilden, dass die Abstrahlfläche mindestens einer Signalfunktion vergrößert wird, ohne die Fläche der gesamten Lichtscheibe (26) zu vergrößern und ohne die Umfangsgröße der einzelnen Lichtscheibenabschnitte verkleinern zu müssen.

Diese Aufgabe wird erfindungsgemäß dadurch gelöst, dass mindestens ein Teil des aus einer der Lichtquellen (24) austretenden Lichtes mittels mindestens eines stab- oder streifenförmigen Lichtleiters (20) in einen Bereich eines benachbarten Lichtscheibenabschnitts geleitet wird, wobei der Lichtleiter optische Mittel (30) aufweist, die das Licht in die gewünschte Lichtaustrittsrichtung umlenken.
Um die Abstrahlfläche der mit Hilfe des Lichtleiters (20) realisierten Signalfunktion zu vergrößern, ist es vorteilhaft, mehrere stab- oder streifenförmige Lichtleiter beabstandet zueinander in der Leuchte (10) anzuordnen.

## Beschreibung

Die Erfindung betrifft eine Mehrkammerleuchte für Fahrzeuge, mit einem Gehäuse, einer davor angeordneten, aus mehreren, den jeweiligen Gehäusekammern zugeordneten Abschnitten bestehenden Lichtscheibe und mit mindestens einer jedem Lichtscheibenabschnitt zugeordneten Lichtquelle.

Eine derartige Leuchte ist aus der DE 26 04 870 A1 bekannt. Die bekannte Leuchte weist jedoch den Nachteil auf, dass bedingt durch den begrenzten Bauraum der Leuchte die Abstrahlfläche der einzelnen Lichtfunktionen in ihrer Größe eingeschränkt ist.
Die Signalwirkung einer Leuchte wird bestimmt durch die Umfangsgröße der Abstrahlfläche und die Leuchtdichte. Je größer die Leuchtdichte ist, je kleiner kann die Umfangsgröße der Abstrahlfläche sein. Der Gesetzgeber schreibt jedoch hinsichtlich der Abstrahlfläche Minimalwerte vor, die nicht unterschritten und hinsichtlich der Leuchtdichte Maximal- bzw. Minimalwerte vor, die nicht über- bzw. unterschritten werden dürfen. Bei Verwendung von Lichtquellen, die einen kleinen Lichtstrom abgeben, muss bei Erhaltung einer guten Signalwirkung die Abstrahlfläche vergrößert werden. Dieses trifft insbesondere dann auf bauliche Schwierigkeiten, wenn die Leuchte mehrere Signalfunktionen hat und zur Verdeutlichung einzelner Signalfunktionen die Lichtscheibe aus mehreren neben- oder untereinanderliegenden Lichtscheibenabschnitten besteht.

Aufgabe der Erfindung ist es, eine gattungsgemäße Mehrkammerleuchte derart weiterzubilden, dass die Abstrahlfläche mindestens einer Signalfunktion vergrößert wird, ohne die Fläche der gesamten Lichtscheibe zu vergrößern und ohne die Umfangsgröße der einzelnen Lichtscheibenabschnitte verkleinern zu müssen.

Diese Aufgabe wird erfindungsgemäß dadurch gelöst, dass mindestens ein Teil des aus einer der Lichtquellen austretenden Lichtes mittels mindestens eines stab- oder streifenförmigen Lichtleiters in einen Bereich eines benachbarten Lichtscheibenabschnitts geleitet wird, wobei der Lichtleiter optische Mittel aufweist, die das Licht in die gewünschte Lichtaustrittsrichtung umlenken.
Um die Abstrahlfläche der mit Hilfe des Lichtleiters realisierten Signalfunktion zu vergrößern, ist es vorteilhaft, mehrere stab- oder streifenförmige Lichtleiter beabstandet zueinander in der Leuchte anzuordnen.
Die streifenförmigen Lichtleiter gehen zweckmäßigerweise von einer zusätzlichen inneren Lichtscheibe aus, die vorteilhaft mit den Lichtleitern einstückig ausgeführt ist, die Lichtquelle glockenförmig umgibt und die Lichtleiterstäbe in dem Leuchtengehäuse halten.
Bei einer vorteilhaften Ausführungsform der Erfindung ist die vordere Fläche der glockenförmigen Lichtscheibe mit optischen Mitteln versehen, die das auf sie auftreffende Licht bündeln.
Weiterhin ist es vorteilhaft, die Lichtscheibe im Bereich der glockenförmigen inneren Lichtscheibe mit optischen Mitteln zu versehen, die das Licht streuen. Um ein optisch ansprechendes Design der Mehrkammerleuchte zu erzeugen, ist es zweckmäßig, die Lichtscheibe einfarbig oder farblos zu gestalten, und die innerer Lichtscheibe als Farbfilter auszuführen oder in die innere Lichtscheibe einen Farbfilter einzusetzen, damit im eingeschalteten Zustand der Leuchte die Signalfunktion in der gesetzlich vorgeschrieben Farbe leuchtet.
Die Lichtleiterstäbe werden bei einer zweckmäßigen Ausführungsform der Erfindung zusätzlich durch das Leuchtengehäuse gehalten.
Um die Signalfunktion der mit Hilfe der Lichtleiterstäbe geleiteten Lichtfunktion und die Signalfunktion der in den anderen Gehäusekammern erzeugten Lichtfunktion nicht zu beeinträchtigen, ist vorteilhaft, die Lichtleiterstäbe in dem Bereich des benachbarten Lichtscheibenabschnitts an ihrer der Lichtscheibe abgewandten Mantelfläche lichtundurchlässig auszuführen, zweckmäßigerweise wird die Mantelfläche metallbedampft.

Die Lichteinkoppelfläche der Lichtleiterstäbe ist bei einer weiteren vorteilhaften Ausführungsform der Erfindung auf dem der Lichtquelle naheliegenden Mantelbereich der Lichtleiter angeordnet und mit optischen Mitteln versehen, die das eingekoppelte Licht in die Längserstreckung der Lichtleiter umlenken.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

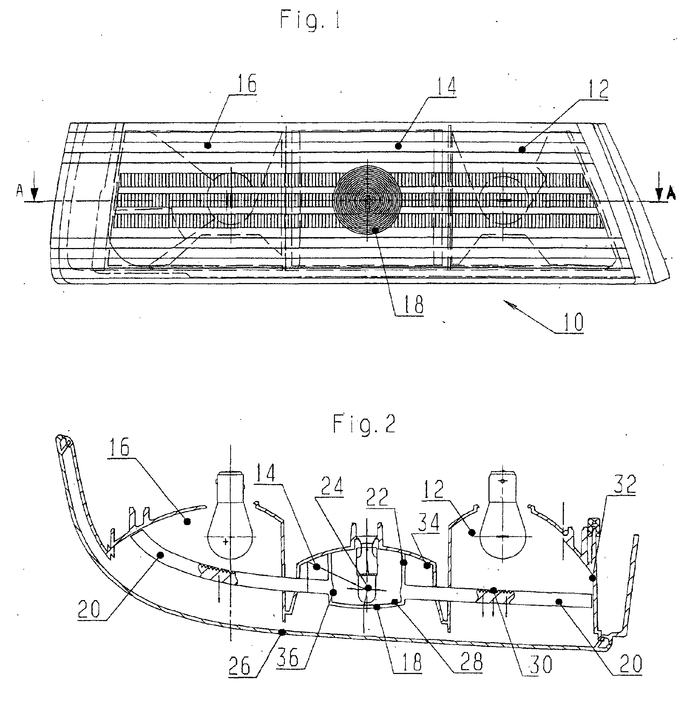

Figur 1: eine gattungsgemäße Leuchte,
Figur 2: einen Schnitt entlang der Linie A-A der Figur 1 und
Figur 3: eine andere Ausführungsform der Leuchte in der Ansicht von Figur 2.

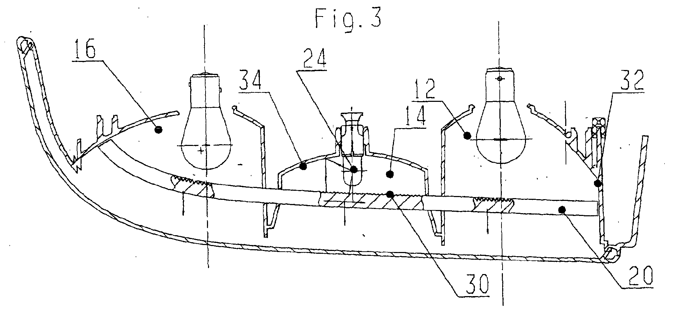

Die Leuchte (10) besteht aus einem Leuchtengehäuse (32) und einer davor angeordneten, das Leuchtengehäuse (32) abdeckende Lichtscheibe (26). In dem so entstandenen Innenraum befinden sich drei horizontal nebeneinander angeordnete Leuchtenkammern (12, 14, 16), denen unterschiedliche Signalfunktionen zugeordnet sind. In der mittleren Leuchtenkammer (14) umschließt eine glockenförmige, in dem Leuchtengehäuse (32) gehaltene innere Lichtscheibe (22) die in der mittleren Leuchtenkammer (14) angeordnete Lichtquelle (24). Die glockenförmige innere Lichtscheibe (22) ist einstückig mit den Lichtleiterstäben (20) ausgeführt, die sich jeweils beabstandet voneinander in die rechte (12) und linke (16) Leuchtenkammer erstrecken. Das Licht der in der mittleren Leuchtenkammer (14) angeordneten Lichtquelle (24) fällt zum Teil auf den ihr zugeordneten Reflektor (34), der das Licht in Richtung der Lichtscheibe (26) reflektiert. Der andere Teil des von der Lichtquelle (24) abgestrahlten Lichts wird über die Lichteinkoppelflächen (36) in die Lichtleiterstäbe (20) eingekoppelt. An den Lichtleiterstäben (20) sind an den der Lichtscheibe (26) abgewandten Mantelflächen Prismen (30) angeformt, die das Licht in Richtung der Lichtscheibe (26) umlenken. Zusätzlich sind die der Lichtscheibe (26) abgewandten Mantelflächen metallbedampft. An die vordere Fläche (18) der inneren Lichtscheibe (22) sind Prismen (28) angeformt, die das auf sie auftreffende Licht bündeln.
Die Lichtfunktionen der rechten (12) und der linken (16) Leuchtenkammer werden wie aus dem Stand der Technik hinreichend bekannt erzeugt.
Bei einer anderen Ausführungsform der Erfindung werden wie aus Fig. 3 ersichtlich, die Lichtleiterstäbe (20) nur in dem Leuchtengehäuse (32) gehalten. Im Bereich der mittleren Leuchtenkammer (14) sind an der der Lichtquelle (24) zugewandten Seite Prismen (30) angeformt, durch die das von der Lichtquelle (24) abgestrahlte und/oder vom Reflektor (34) reflektierte Licht in die Lichtleiterstäbe (20) eingekoppelt wird. In den Bereichen der rechten (12) und linken (16) Leuchtenkammer sind Prismen (30) angeformt, die das in die Lichtleiterstäbe (20) eingekoppelte Licht in Richtung der Lichtscheibe (26) umlenken.

### Bezugszeichenliste:

- 10: Leuchte
- 12: rechte Leuchtenkammer
- 14: mittlere Leuchtenkammer
- 16: linke Leuchtenkammer
- 18: vordere Fläche der innere Lichtscheibe
- 20: Lichtleiterstab
- 22: innere Lichtscheibe
- 24: Lichtquelle
- 26: Lichtscheibe
- 28: Prismen
- 30: Prismen
- 32: Leuchtengehäuse
- 34: Reflektor
- 36: Lichteinkoppelfläche

## Patentansprüche

1. Mehrkammerleuchte für Fahrzeuge, mit einem Gehäuse, einer davor angeordneten, aus mehreren, den jeweiligen Gehäusekammern zugeordneten Abschnitten bestehenden Lichtscheibe und mit mindestens einer jedem Lichtscheibenabschnitt zugeordneten Lichtquelle, **dadurch gekennzeichnet, dass** mindestens ein Teil des aus einer der Lichtquellen austretenden Lichtes mittels mindestens eines stab- oder streifenförmigen Lichtleiters in einen Bereich eines benachbarten Lichtscheibenabschnitts geleitet wird, wobei der Lichtleiter optische Mittel aufweist, die das Licht in die gewünschte Lichtaustrittsrichtung umlenken.

2. Mehrkammerleuchte nach Anspruch 1, **dadurch gekennzeichnet, dass** in der Leuchte mehrere stab- oder streifenförmige Lichtleiter beabstandet zueinander angeordnet sind.

3. Mehrkammerleuchte nach einem der vorstehenden Ansprüche, **dadurch gekennzeichnet, dass** die Lichtleiter von einer zusätzlichen inneren Lichtscheibe ausgehen.

4. Mehrkammerleuchte nach Anspruch 3, **dadurch gekennzeichnet, dass** die innere Lichtscheibe und die Lichtleiter einstückig ausgeführt sind.

5. Mehrkammerleuchte nach Anspruch 3 oder 4, **dadurch gekennzeichnet, dass** die innere Lichtscheibe glockenförmig die Lichtquelle umgibt.

6. Mehrkammerleuchte nach Anspruch 5, **dadurch gekennzeichnet, dass** die vordere Fläche der glockenförmigen inneren Lichtscheibe optische Mittel aufweist, die das auf sie auftreffende Licht bündeln.

7. Mehrkammerleuchte nach einem der vorstehenden Ansprüche, **dadurch gekennzeichnet, dass** die Lichtscheibe im Bereich der glockenförmigen inneren Lichtscheibe mit optischen Mitteln versehen ist, die das Licht streuen.

8. Mehrkammerleuchte nach einem der vorstehenden Ansprüche, **dadurch gekennzeichnet, dass** die innere Lichtscheibe als Farbfilter ausgeführt ist.

9. Mehrkammerleuchte nach einem der vorstehenden Ansprüche, **dadurch gekennzeichnet, dass** in die innere Lichtscheibe ein Farbfilter eingesetzt ist.

10. Mehrkammerleuchte nach einem der vorstehenden Ansprüche, **dadurch gekennzeichnet, dass** die Lichtleiterstäbe durch das Leuchtengehäuse gehalten werden.

11. Mehrkammerleuchte nach einem der vorstehenden Ansprüche, **dadurch gekennzeichnet, dass** die Lichtleiter in dem Bereich des benachbarten Lichtscheibenabschnitts an ihrer, der Lichtscheibe abgewandten Mantelfläche lichtundurchlässig ausgeführt sind.

12. Mehrkammerleuchte nach Anspruch 11, **dadurch gekennzeichnet, dass** die Lichtleiter in dem Bereich des benachbarten Lichtscheibenabschnitts an ihrer, der Lichtscheibe abgewandten Mantelfläche metallbedampft sind.

13. Mehrkammerleuchte nach einem der vorstehenden Ansprüche, **dadurch gekennzeichnet, dass** die Lichteinkoppelfläche der Lichtleiter auf dem der Lichtquelle naheliegenden Mantelbereich der Lichtleiter angeordnet ist.

14. Mehrkammerleuchte nach einem der vorstehenden Ansprüche, **dadurch gekennzeichnet, dass** die Lichteinkoppelfläche der Lichtleiterstäbe mit optischen Mitteln versehen ist.
